Europäisches Patentamt

(19) European Patent Office

Office européen des brevets

(11) Numéro de publication: **0 071 510**
**A1**

(12) # DEMANDE DE BREVET EUROPEEN

(21) Numéro de dépôt: **82401309.8**

(22) Date de dépôt: **09.07.82**

(51) Int. Cl.³: **H 04 N 9/535**
**H 04 N 9/491**

(30) Priorité: **28.07.81 FR 8114628**

(43) Date de publication de la demande:
**09.02.83 Bulletin 83/6**

(84) Etats contractants désignés:
**AT BE CH DE GB IT LI LU NL SE**

(71) Demandeur: **THOMSON-CSF**
**173, boulevard Haussmann**
**F-75379 Paris Cedex 08(FR)**

(72) Inventeur: **Rougeolle, Daniel**
**THOMSON-CSF SCPI 173, bld Haussmann**
**F-75379 Paris Cedex 08(FR)**

(72) Inventeur: **Porrot, Pascal**
**THOMSON-CSF SCPI 173, bld Haussmann**
**F-75379 Paris Cedex 08(FR)**

(74) Mandataire: **Turlèque, Clotilde et al,**
**THOMSON-CSF SCPI 173, Bld Haussmann**
**F-75379 Paris Cedex 08(FR)**

(54) **Procédé et dispositif de reconstitution d'une image de télévision à partir d'une trame d'un signal composite numérisé.**

(57) Le dispositif de reconstitution d'images à partir d'une trame numérisée et mise en mémoire comporte deux voies reliées à la mémoire de trame (1), l'une comportant un dispositif d'extraction de luminance (3) effectuant un traitement consistant à transmettre directement les échantillons pour les trames de la séquence ayant la même parité que la trame en mémoire et des moyennes d'échantillons pris sur deux lignes adjacentes pour les trames de parité différente. L'autre voie comporte : un dispositif d'extraction de chrominance (7) effectuant un traitement des échantillons de la trame en mémoire pour l'obtention d'échantillons caractéristiques de la chrominance pour la trame de séquence studio en cours. Chaque dispositif d'extraction est suivi d'un convertisseur numérique-analogique (4, 8) et d'un filtre adapté à la bande du signal à transmettre, filtre de luminance (5) et filtre de chrominance (9), ces filtres étant reliés à un sommateur (6) délivrant le signal composite reconstitué.

Application, notamment, à l'arrêt sur image dans un magnétoscope numérique.

./...

EP 0 071 510 A1

FIG_4

1

# PROCEDE ET DISPOSITIF DE RECONSTITUTION D'UNE IMAGE DE TELEVISION A PARTIR D'UNE TRAME D'UN SIGNAL COMPOSITE NUMERISE

L'invention se rapporte au traitement des signaux de télévision et plus particulièrement à un procédé et à un dispositif de reconstitution d'une image de télévision à partir d'une seule trame d'un signal composite numérisé.

Dans les systèmes de traitement numérique de signal de télévision, du type magnétoscope à traitement numérique segmenté (une trame occupant plusieurs pistes de la bande), on dispose d'une mémoire de trame dans laquelle sont enregistrés les valeurs des échantillons d'une trame du signal composite. Un des problèmes posés par ce type de structure est l'obtention de la fonction arrêt sur image. En effet, il est difficile de relire plusieurs fois la même image directement sur la bande du magnétoscope.

Un moyen pour obtenir la fonction d'arrêt sur image est donc de relire plusieurs fois la mémoire dans laquelle sont enregistrées les valeurs numériques des échantillons d'une seule trame du signal composite et de traiter ces valeurs pour obtenir une trame quelconque de la séquence studio, les trames consécutives d'une séquence de télévision étant différentes dans leur chronogramme en ce qui concerne les signaux de synchronisation ligne, la phase de la sous-porteuse et même, dans certains systèmes le contenu de l'information transmise sur les lignes successives des trames.

Un moyen pour reconstituer le cycle complet d'un signal composite de télévision à partir des échantillons d'une seule trame consisterait à démoduler le signal de façon classique pour obtenir le signal vidéofréquence composite puis à le remoduler en suivant la séquence en cours

Un dispositif de mise en oeuvre de ce procédé serait coûteux.

L'invention a pour objet un procédé, et un dispositif, de reconstitution d'une image de télévision à partir d'une seule trame du signal composite qui ne nécessite pas de démodulation du signal de trame enregistré, les échantillons enregistrés étant traités directement afin d'insérer l'information mise en mémoire dans le système de traitement dans une séquence élaborée localement en studio.

Suivant l'invention un procédé de reconstitution d'une image de télévision à partir d'une trame d'un signal composite numérisé et mis en mémoire, est caractérisé en ce qu'il consiste à traiter directement les valeurs des échantillons de la trame en mémoire, en fonction de la séquence de synchronisation des trames gouvernant la reconstitution de l'image, par deux traitements indépendants pour l'obtention d'une composante de luminance d'une part, et d'une composante de chrominance d'autre part, l'addition de ces deux composantes donnant un signal composite synchronisé avec la séquence de synchronisation de l'image, le traitement pour l'obtention de la composante de luminance consistant à transmettre directement les valeurs d'échantillons pour les trames studio de même parité que la trame en mémoire et à transmettre les moyennes entre les échantillons de deux lignes adjacentes pour chaque trame de la séquence de parité différente de celle de la trame en mémoire.

Suivant l'invention le dispositif destiné à la mise en oeuvre de ce procédé est caractérisé en ce qu'il comporte une mémoire de trame pour la mise en mémoire des valeurs d'échantillons de la trame du signal composite numérisé, un circuit à retard de retard égal à deux périodes de ligne ayant une sortie intermédiaire après un retard d'une période de ligne, deux voies parallèles de traitement dont les sorties délivrent respectivement la composante de luminance et la composante de chrominance adaptées à la trame de la séquence studio en cours, ces sorties étant reliées aux entrées d'un sommateur de sortie, chaque voie de traitement comportant un dispositif de traitement des valeurs d'échantillons, un convertisseur numérique-analogique et un filtre adapté à la bande de la composante à transmettre.

L'invention sera mieux comprise et d'autres caractéristiques apparaîtront à l'aide de la description qui suit en référence aux figures annexées.

Les figures 1, 2 et 3 représentent schématiquement les chronogrammes des signaux de synchronisation du début et de la fin de quatre trames consécutives d'un signal de télévision, respectivement dans les standards NTSC, SECAM et PAL.

La figure 4 est un schéma synoptique du dispositif de reconstitution d'un signal vidéo composite caractéristique d'une trame quelconque d'un cycle à partir d'une trame du signal composite mis en mémoire.

La figure 5 est un schéma du dispositif d'extraction de luminance du dispositif selon l'invention.

Les figures 6, 7 et 10 représentent le dispositif d'extraction de chrominance du dispositif de reconstitution suivant l'invention respectivement pour les standards NTSC, SECAM et PAL.

La figure 8 représente une mémoire de ligne du circuit à retard avec son circuit d'adressage et de mise en phase, pour le système PAL.

La figure 9 représente la mémoire de trame et le circuit d'adressage et de mise en phase associé pour le système PAL.

Lorsque la référence studio a un déroulement prédéterminé correspondant à l'un ou l'autre des systèmes de télévision possibles, NTSC, SECAM ou PAL, et que la transmission de la trame mise en mémoire est commandée plusieurs fois de suite pour réaliser un arrêt sur image, la séquence de trame en studio ne correspond pas forcément à la trame mise en mémoire car les trames consécutives ne sont pas semblables. Il est donc nécessaire, pour reconstituer l'image à partir des échantillons de la trame mis en mémoire, d'effectuer un traitement de ces échantillons en fonction de la séquence de trame provenant du studio, pour que les signaux vidéo résultant de ce traitement soient convenablement insérés dans la séquence, quelle que soit la trame enregistrée.

Pour cela le procédé de reconstitution d'image suivant l'invention réalise un double traitement des échantillons issus de la mémoire pour reconstituer un signal de luminance d'une part et un signal de chrominance d'autre part, ces signaux étant additionnés pour former un signal vidéo composite compatible avec la séquence studio en cours.

Comme indiqué ci-dessus les séquences de trames consécutives formant un signal de télévision ne sont pas semblables et cela quel que soit le système de télévision mis en oeuvre.

Le cycle après lequel les informations d'une ligne donnée dans une trame sont transmises de manière analogue dans une autre trame est de quatre trames dans le système NTSC, peut être également réduit à quatre trames dans le système SECAM, et est de huit trames dans le système PAL.

A partir d'une séquence studio qui est la séquence dans laquelle doit être insérée la trame en mémoire, le procédé et le dispositif suivant l'invention permettent de transformer les informations en mémoire de trame, ou éventuellement de les transmettre telles quelles, de façon qu'elles soient convenablement insérées dans la séquence studio, ce traitement étant direct, sans démodulation. Ceci est obtenu soit à partir de la même ligne ou d'une ligne voisine de la ligne a reconstituer lorsque les caractéristiques de ces lignes dans les deux trames correspondantes sont semblables, soit en combinant les échantillons de plusieurs lignes contenant le même type d'informations couleur lorsque les signaux numérisés sont des signaux modulés en amplitude, que les sous-porteuses sont en phase ou en opposition de phase et que l'échantillonnage est synchrone. Il est nécessaire dans ce traitement de tenir compte de la phase de la sous-porteuse.

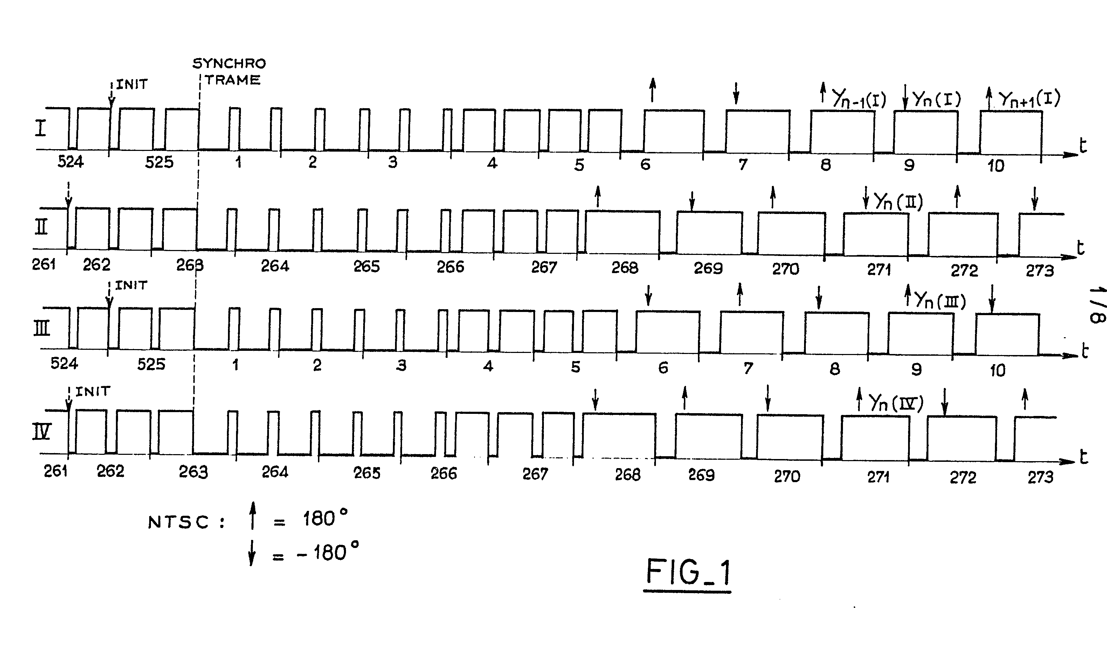

La figure 1 représente schématiquement les signaux de synchronisation pour le début et la fin de quatre trames consécutives dans le système de télévision NTSC dans lequel, le signal composite de télévision comporte : un signal de luminance de 5 à 6 MHz de bande passante et une sous-porteuse couleur modulée en amplitude par la composante de chrominance. La fréquence de la sous-porteuse de couleur $f_{sc}$, est un multiple impair de la demi fréquence de ligne : si $F_H$ est la fréquence ligne, $f_{sc} = \frac{455}{2} f_H$. En fait, les deux composantes de chrominance I et Q modulent en amplitude deux sous-porteuses en quadrature à cette fréquence $f_{sc}$, transmises simultanément. Le signal de chrominance est donc un signal sinusoïdal dont l'amplitude est caractéristique de la saturation, et la phase de la teinte. Au début de chaque ligne est transmise la fréquence sous-porteuse $f_{sc}$. Ces phases sont représentées par des flèches dont la signification est la suivante : ↑ = 180° ↓ = − 180° par rapport à la synchronisation ligne. Cette référence ne se retrouve en phase sur des lignes correspondantes débutant au même instant par rapport à la synchronisation trame que toutes les quatre trames, ces quatre trames se répétant cycliquement. Ces trames sont désignées I, II, III et IV sur les figures.

Avant l'enregistrement en mémoire de trame, la conversion analogique-numérique du signal vidéo composite est effectuée à une fréquence d'échantillonnage, $F_{ech} = 4 f_{sc}$, en phase avec la porteuse, les échantillons sur les lignes correspondantes des différentes trames sont donc synchrones.

La lecture de la mémoire tient compte du décalage de phase entre la sous-porteuse correspondant à la ligne en mémoire et la sous-porteuse de la ligne correspondante adaptée à la séquence studio pour que l'image obtenue soit stable. En effet pour les trames II, III, IV, la porteuse est décalée respectivement de 0, 1/2 et 1/2 période de sous-porteuse par rapport à la synchronisation ligne.

Toutes les lignes étant semblables en ce qui concerne la luminance, pour la reconstitution de la composante de luminance, il suffit alors de transmettre les mêmes échantillons pour les lignes correspondantes des trames de même parité que celle de la trame mise en mémoire, et de faire une moyenne des échantillons correspondants des deux lignes adjacentes à la ligne souhaitée pour les trames de parité différente de celle de la trame en mémoire.

Par contre, pour la composante de chrominance, toutes les lignes comportent le même type d'informations de chrominance mais la phase de la sous-porteuse est inversée à chaque ligne. Le traitement consiste alors à récréer la séquence couleur en transmettant les échantillons de la ligne correspondante, inversés ou non, pour les trames de même parité et à transmettre des moyennes entre des échantillons des lignes adjacentes à la ligne souhaitée, avec inversion de signe éventuel, pour les trames de parité différente de celle en mémoire, de la manière suivante :

Pour les échantillons d'une ligne n des trames de type II, c'est-à-dire décalées de un rang dans la séquence des trames par rapport à la trame en mémoire :

$$Y_n(II) = \frac{1}{2}\left[Y_n(I) - Y_{n-1}(I)\right]$$

Le signe des échantillons $Y_{n-1}$ de la ligne n-1 de la trame I doit être inversé car la phase des sous-porteuses est inversée par rapport à celles des composantes correspondantes de la ligne n de la trame II et de la trame I.

6

De même :

$$Y_n(III) = - Y_n(I)$$
$$Y_n(IV) = \frac{1}{2} \left[ -Y_n(I) + Y_{n-1}(I) \right].$$

Après ces traitements numériques des échantillons, en vue de recréer respectivement une composante de luminance et une composante de chrominance, la reconstitution est obtenue en convertissant les suites d'échantillons obtenus en signaux analogiques qui sont alors filtrés pour ne retenir que les parties correspondant respectivement à la bande vidéo de luminance et à la bande de sous-porteuse de chrominance. Les signaux résultants sont alors additionnés pour former un signal vidéo composite qui peut alors être convenablement inséré dans la séquence.

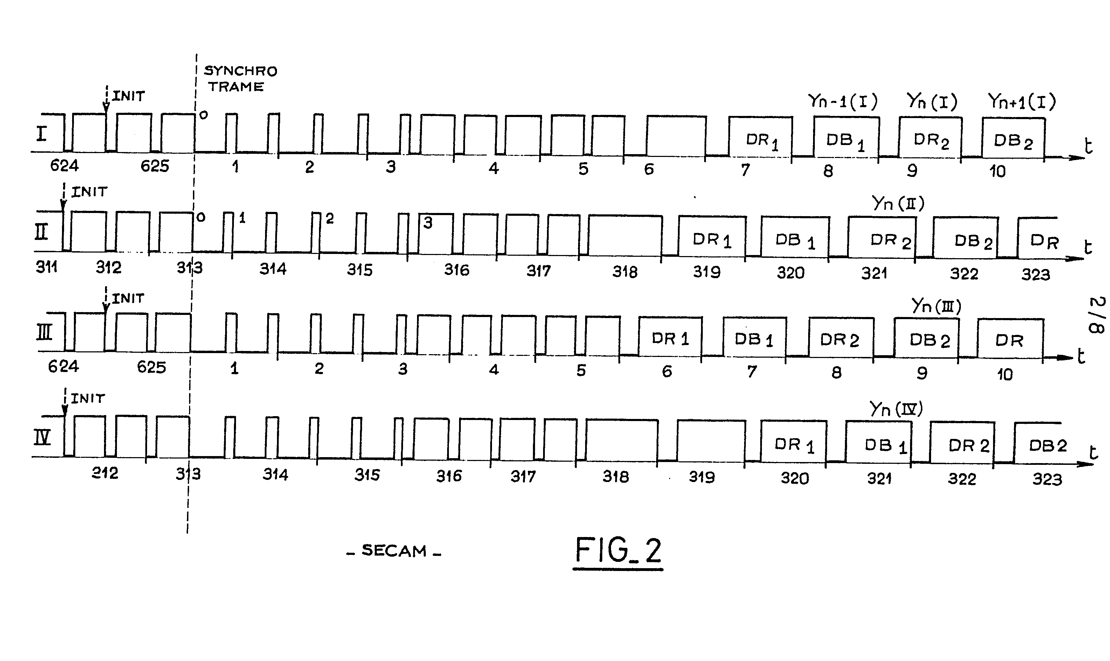

La figure 2 représente schématiquement les signaux de synchronisation pour le début et la fin de quatre trames consécutives dans le système de télévision SECAM.

Dans ce système, la composante de luminance est de même nature que celle du système NTSC. Par conséquent le traitement à réaliser est le même.

Les informations de chrominance sont transmises alternativement à chaque ligne en modulant en fréquence deux sous-porteuses de couleur distinctes dont les fréquences $f_{ob}$ et $f_{or}$ sont des multiples pairs de la fréquence ligne, $f_{or} = 282 f_H$, $f_{ob} = 272 f_H$. Il n'est donc pas possible de combiner des lignes adjacentes de la trame en mémoire pour recréer la séquence couleur. La séquence couleur est donc obtenue dans ce système en prenant pour constituer une ligne n d'une trame, les échantillons de la ligne la plus proche de la trame en mémoire contenant le même type d'informations. Si la séquence couleur sur les lignes, n-1, n, n+1 de la trame I en mémoire est DB1, DR2, DB2, les échantillons de la ligne n, pour la trame II, $Y_n(II)$, seront les échantillons de la ligne n de la trame I, $Y_n(I)$. Pour les trames III et IV ils seront respectivement :

$$Y_n(III) = Y_{n+1}(I)$$

et $Y_n(IV) = Y_{n-1}(I).$

Le traitement des échantillons ainsi obtenus pour l'obtention de la composante de chrominance est ensuite le même que celui décrit ci-dessus dans le cas du système NTSC.

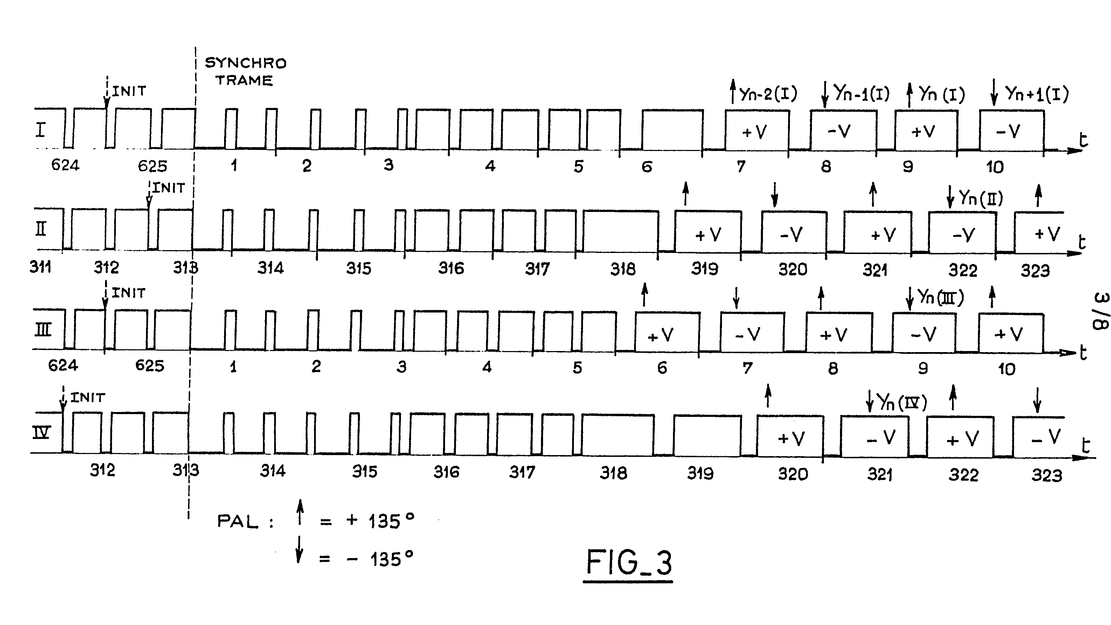

La figure 3 représente schématiquement les signaux de synchronisation pour le début et la fin de quatre trames consécutives dans le système de télévision PAL. Dans ce système la composante de luminance est de même nature que celle des autres systèmes et le traitement est en conséquence le même.

Comme dans le système NTSC, la conversion analogique numérique avant mise en mémoire, est faite avec un signal d'échantillonnage en phase avec la sous-porteuse, c'est-à-dire décalé, par rapport à la synchronisation ligne, d'une trame à la suivante. La phase de la sous-porteuse ne se retrouvant identique à elle-même par rapport à la synchronisation ligne qu'après un cycle de huit trames, la lecture de la mémoire est effectuée de telle façon que les échantillons pris sur les lignes différentes correspondent à des sous-porteuses en phase de façon que l'image soit stable. En effet, la fréquence de la sous-porteuse de chrominance $f_{sc}$ en fonction de la fréquence ligne $f_H$ est : ($f_{sc} = \frac{1135}{4} + \frac{1}{625}$) $f_H$, c'est-à-dire que dans une ligne il y a 283 périodes entières de sous-porteuse et ($\frac{3}{4} + \frac{1}{625}$) période de sous-porteuse. Avant d'effectuer des combinaisons d'échantillons entre plusieurs lignes, il faut que les échantillons considérés sur des lignes différentes correspondent à la même phase de sous-porteuse.

De plus, les deux composantes de chrominance U et V modulent cette fréquence porteuse de la manière suivante : U module en amplitude une sous-porteuse de fréquence $f_{sc}$ et V module en amplitude une sous-porteuse de même fréquence $f_{sc}$ en quadrature avec la première pendant une ligne soit +V, et -V module la même sous-porteuse toujours en quadrature sur la ligne suivante, soit -V, ces deux compostantes U et +V ou U et -V étant transmises simultanément. Le signal de chrominance est alors un signal sinudoïdal de même type que celui d'un système NTSC dont l'amplitude est caractéristique de la saturation et la phase de la teinte. Pour retrouver le même type d'information, U + V ou U - V sur une ligne donnée des trames, il faut attendre deux images, soit quatre trames. De plus, du fait du décalage de $\frac{3}{4} + \frac{1}{625}$ de période de sous-porteuse par ligne, pour que cette sous-porteuse ait la même phase sur une ligne donnée des trames, il faut deux images supplémentaires. Le cycle complet en PAL comporte donc huit trames. Seules quatre d'entre elles, I, II, III et IV ont été représentées (partiellement) sur le chronogramme de la figure 3. Les quatre suivantes sont déduites de celles représentées en inversant la phase de la porteuse.

Comme dans les cas précédents la trame en mémoire étant une trame de type I, les autres trames sont déduites de celle-ci de la façon suivante :

trame   II : $Y_n(II) = \frac{1}{4} Y_{n-2}(I) - \frac{3}{4} Y_n(I)$

trame III : $Y_n(III) = -\frac{1}{2} Y_{n-1}(I) + \frac{1}{2} Y_{n+1}(I)$

trame IV : $Y_n(IV) = \frac{3}{4} Y_{n-1}(I) - \frac{1}{4} Y_{n+1}(I)$

trame   V : $Y_n(V) = -Y_n(I)$

trame VI : $Y_n(VI) = -\frac{1}{4} Y_{n-2}(I) + \frac{3}{4} Y_n(I)$

trame VII : $Y_n(VII) = +\frac{1}{2} Y_{n-1}(I) - \frac{1}{2} Y_{n+1}(I)$

trame VIII : $Y_n(VIII) = -\frac{3}{4} Y_{n-1}(I) + \frac{1}{4} Y_{n+1}(I).$

Pour les trames de type II ou VI, il est inutile de disposer de mémoires supplémentaires pour trois lignes pour avoir simultanément à tout instant les lignes de rangs n-2, n-1, n et n+1. En conséquence un décalage est réalisé dans le rang, n, ce qui revient à initialiser de manière différente les trames lors des impulsions de synchronisation trame de la séquence studio : compte tenu de l'avance de une ligne nécessaire par rapport aux impulsions de synchronisation trame pour disposer simultanément des informations concernant trois lignes successives, l'initialisation est réalisée une ligne avant la synchronisation trame pour les trames I, III et V, VII, une ligne et demi avant pour les trames IV et VIII et seulement une demi ligne avant la synchronisation trame pour les trames II et VI.

Compte tenu du décalage :

$$Y_n(II) = \frac{1}{4} Y_{n-1}(I) - \frac{3}{4} Y_{n+1}(I)$$

$$Y_n(VI) = -\frac{1}{4} Y_{n-1}(I) + \frac{3}{4} Y_{n+1}(I).$$

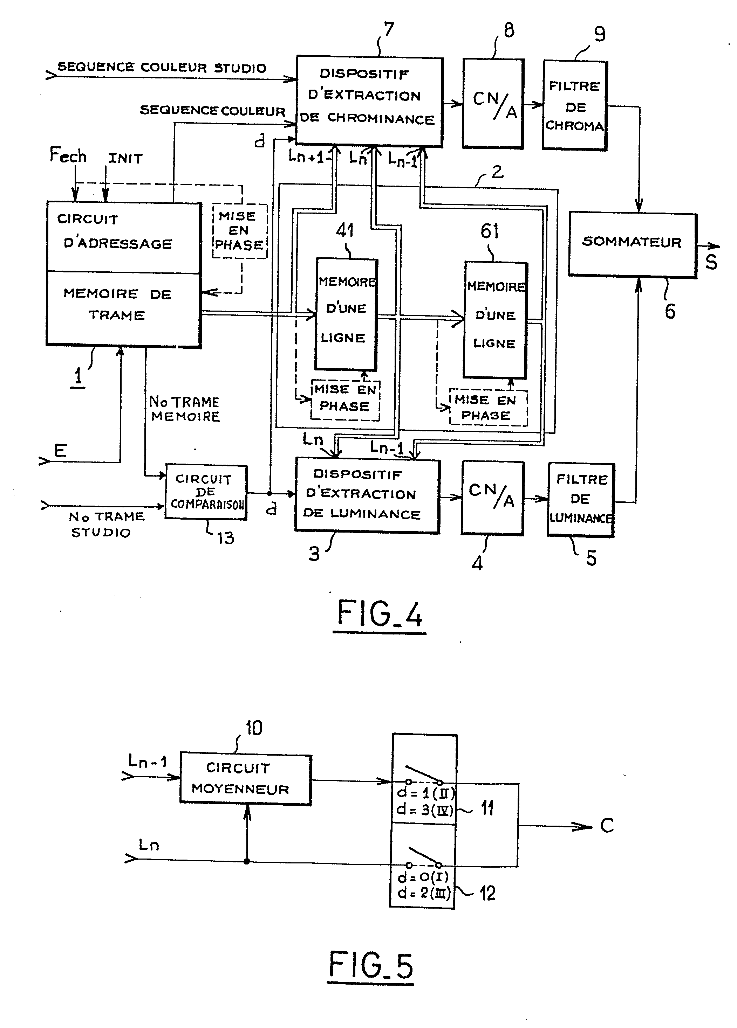

La figure 4 représente un schéma synoptique du dispositif de reconstitution d'image à partir d'une seule trame du signal composite selon l'invention.

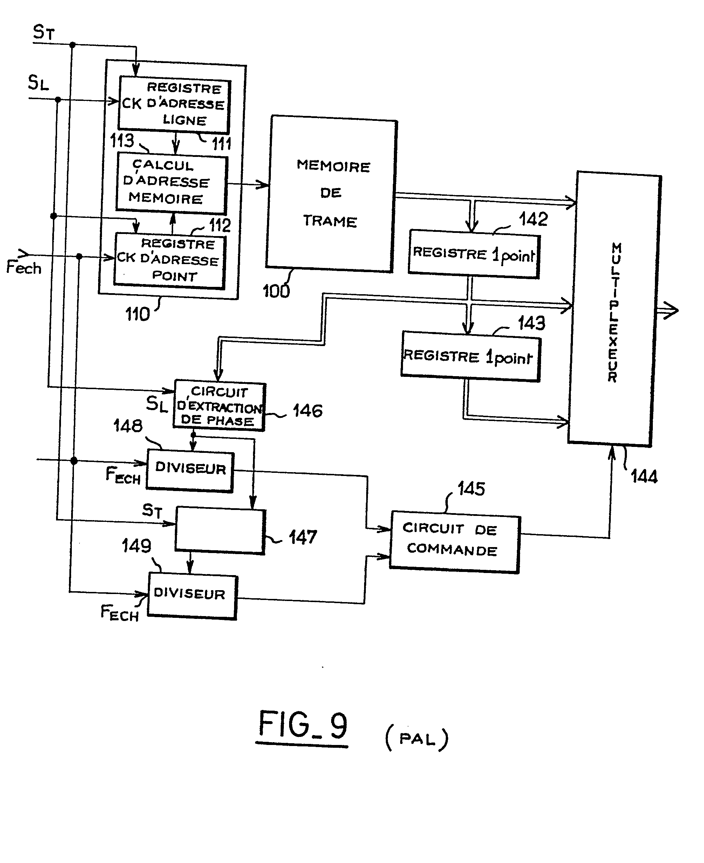

Ce dispositif comporte principalement une mémoire d'une trame 1, avec son circuit d'adressage en écriture et en lecture, dans laquelle ont été stockées les données binaires correspondant à l'échantillonnage d'une trame d'un signal vidéo composite à une fréquence d'échantillonnage égale à $4f_{sc}$ pour les systèmes NTSC et PAL, et à une fréquence d'échantillonnage multiple de la fréquence trame pour le système SECAM. Cette mémoire, et les circuits associés, 1, dont un schéma détaillé sera décrit en référence à la figure 9 pour le système PAL, a une sortie de données reliée à l'entrée d'un circuit à retard 2, comportant deux mémoires d'une ligne 41 et 61, fournissant en parallèle les données correspondant à trois lignes consécutives de la trame, soient $L_{n-1}$, $L_n$, et $L_{n+1}$. Ces données sont fournies aux entrées de données de deux voies parallèles, l'une destinée à l'obtention de la composante de chrominance, l'autre destinée à l'obtention de la composante de luminance. La voie destinée au traitement de la luminance comporte un dispositif d'extraction de luminance, 3, à l'entrée duquel est appliqué un signal fonction du décalage d entre les numéros de la trame mémoire et de la trame studio dans le cycle. Ce signal de commande est obtenu par un circuit de comparaison 13 recevant deux informations, l'une issue de la mémoire de trame, 1, donnant l'information concernant le numéro de la trame mise en mémoire, l'autre provenant du studio et donnant le numéro de la trame à composer dans la séquence studio.

Ce dispositif d'extraction de luminance est décrit plus en détails en référence à la figure 5. Il fournit sur sa sortie des échantillons dérivés des échantillons contenus dans la mémoire de trame mais susceptibles d'être insérés convenablement dans la séquence studio. Ces échantillons sont appliqués à l'entrée d'un convertisseur numérique-analogique, 4, dont la sortie est elle-même reliée à l'entrée d'un filtre passe-bas analogique, 5, dont la fréquence de coupure est 3,5 MHz. Le signal de sortie de ce filtre est donc la composante de luminance adaptée à la séquence de studio en cours. La sortie de ce filtre est reliée à la première entrée d'un sommateur, 6, dont la sortie est la sortie du dispositif de reconstitution d'image S.

De manière semblable, la voie de traitement de chrominance comporte un dispositif d'extraction de chrominance, 7, dont l'entrée multiple est reliée à la sortie multiple du circuit à retard, 2, ce dispositif d'extraction de chrominance, 7, réalisant une combinaison des échantillons présents sur des lignes consécutives de la trame en mémoire pour fournir une composante de chrominance adaptée à la séquence studio en cours. Comme indiqué ci-dessus en liaison avec la description du procédé, ce dispositif d'extraction de chrominance réalise une combinaison des échantillons qui varie suivant la trame en mémoire et suivant la trame en cours. Pour cela, ce dispositif d'extraction, 7, comporte en outre une entrée de commande également reliée à la sortie du circuit de comparaison 13 et deux autres entrées l'une reliée à la sortie de la mémoire, 1, qui fournit la séquence couleur liée à la trame en mémoire, et l'autre recevant la séquence couleur correspondant à la trame studio. La sortie multiple de ce dispositif d'extraction de chrominance fournit donc des échantillons en rapport avec la séquence couleur studio, directement dérivés de la trame en mémoire. Ces échantillons sont appliqués à l'entrée d'un convertisseur numérique-analogique, 8, dont la sortie est reliée à l'entrée d'un filtre passe-bande, 9, dont la bande est la bande du signal de chrominance pour le système de télévision utilisé. La sortie de ce filtre fournit donc la composante de chrominance du signal de télévision adaptée à la trame studio en cours, qui est appliquée à la seconde entrée du sommateur, 6. Le signal de sortie du sommateur, 6, est donc le signal vidéo composite représentant le même contenu d'information que celui en mémoire de trame mais adapté à la trame studio en cours.

Comme indiqué ci-dessus le dispositif d'extraction de luminance, 5, fonctionne de la même manière quel que soit le système de télévision utilisé, NTSC, SECAM, ou PAL, des décalages étant réalisés dans l'adresse de lecture de la mémoire 1 pour tenir compte des déphasages éventuels dans les systèmes NTSC et PAL.

La figure 5 représente un schéma détaillé de ce dispositif d'extraction de luminance. Comme indiqué ci-dessus, pour les trames de même parité que la trame en mémoire (d = 0 ou d = 2, les échantillons en mémoire de trame sont transmis directement, alors que, pour les trames de parité différente de la mémoire de trame, une moyenne entre deux lignes successives permet d'obtenir les échantillons correspondant à la

11

luminance pour la séquence studio en cours. Le dispositif comporte donc deux entrées pour les deux lignes successives $L_n$ et $L_{n-1}$ reliées aux deux entrées d'un circuit moyenneur, 10. La sortie de ce circuit moyenneur est reliée à l'entrée d'un premier interrupteur, 11, un second interrupteur, 12, étant relié directement à l'entrée $L_n$ du circuit. Ces deux interrupteurs sont commandés par le décalage de la trame dans la séquence par rapport à la trame en mémoire de façon que l'interrupteur, 12, soit fermé lorsque la parité trame studio est la même que la parité de la trame en mémoire, l'interrupteur 11 étant ouvert, et que l'interrupteur, 11, soit fermé lorsque la parité trame studio est différente de la parité trame en mémoire, l'interrupteur 12 étant alors ouvert. Les deux sorties de ces interrupteurs, 11 et 12 sont reliées à la sortie du dispositif d'extraction de luminance

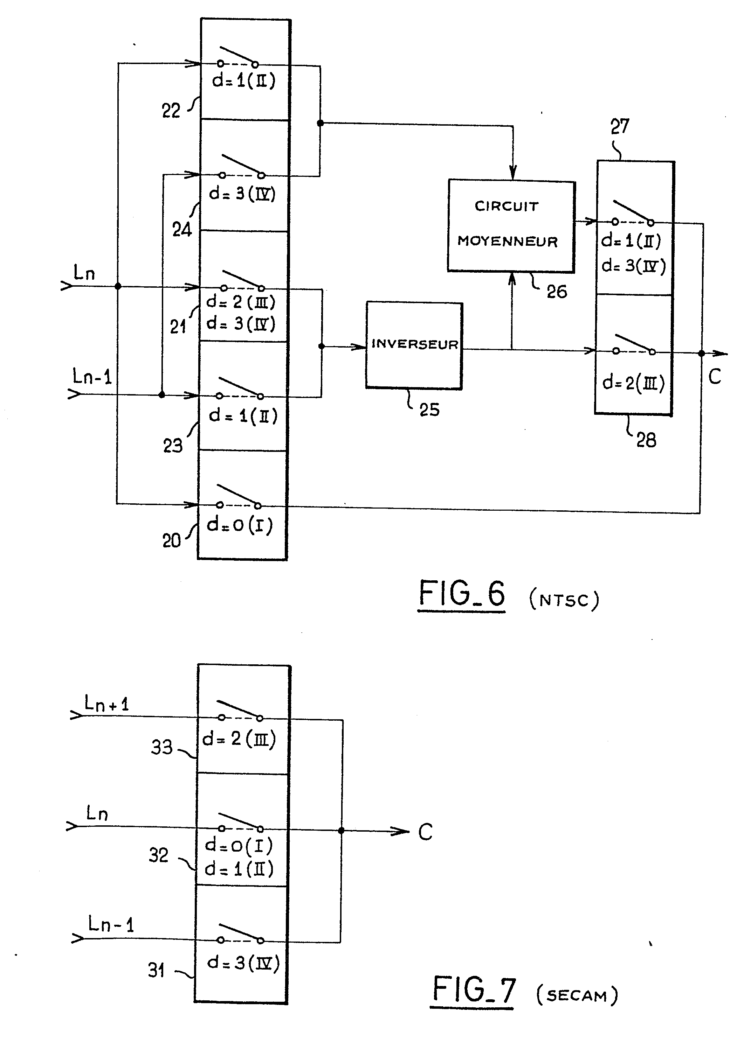

La figure 6 représente la partie du dispositif d'extraction de chrominance, 7, de la figure 4 pour le système NTSC. Comme indiqué ci-dessus dans la description du procédé de reconstitution d'image, le système NTSC requiert pour l'obtention de l'image une combinaison des échantillons de deux lignes successives de la trame en mémoire. Le dispositif comporte donc deux entrées recevant les échantillons correspondants de deux lignes successives $L_n$ et $L_{n-1}$, la première $L_n$ est reliée à l'entrée de trois interrupteurs, 20, 21 et 22, la seconde $L_{n-1}$ est reliée à l'entrée de deux interrupteurs, 23 et 24. L'interrupteur, 20, est fermé lorsque la trame studio a le même rang dans la séquence que la trame en mémoire (d = 0), la sortie de cet interrupteur étant reliée directement à la sortie C du dispositif d'extraction de chrominance. Pour une trame de type II, sur le schéma de la figure 1, (décalée de un rang dans le cycle) la trame en mémoire étant de type I, les interrupteurs 22 et 23 sont fermés les autres étant ouverts; la sortie de l'interrupteur, 23, est reliée à l'entrée d'un inverseur, 25, dont la sortie est reliée à la première entrée d'un sommateur, 26, la sortie de l'interrupteur, 22, étant directement reliée à la seconde entrée du circuit moyenneur, 26. La sortie de ce circuit moyenneur est reliée à la sortie C du dispositif d'extraction de chrominance par l'intermédiaire d'un interrupteur, 27, fermé lorsque la trame studio est de type II.

L'interrupteur, 21, est fermé lorsque la trame est de type III sur la figure 1, (décalée de deux rangs dans le cycle) la sortie de cet interrupteur étant également reliée à l'entrée de l'inverseur, 25. La sortie de cet inverseur, 25, est également reliée à l'entrée d'un second interrupteur de sortie, 28, dont la sortie est reliée à la sortie C, et qui est fermé lorsque la trame est de type III. Enfin les interrupteurs, 21 et 24, sont fermés simultanément, les autres étant ouverts lorsque la trame est de type IV par rapport à la trame mémoire (décalée de trois rangs dans le cycle). La sortie de l'interrupteur, 24, est reliée à la seconde entrée du circuit moyenneur, 26, le circuit interrupteur, 27, couplé à la sortie du circuit moyenneur étant également fermé lorsque la trame est de type IV. Ainsi, les échantillons obtenus à la sortie C du dispositif d'extraction de chrominance sont ceux annoncés ci-dessus après combinaison de deux lignes consécutives pour les trames de parité différente de la trame en mémoire, et directement dérivés, éventuellement après inversion, de la trame en mémoire pour les trames de même parité.

Les entrées de commande des interrupteurs n'ont pas été représentées. Pratiquement, un circuit relié à la sortie du circuit de comparaison 13 délivre quatre signaux de commande respectivement à l'état zéro et commandant la fermeture des interrupteurs lorsque la trame studio est décalée de zéro, une, deux ou trois trames par rapport à la trame mémoire, ce qui correspond aux trames de type I, II, III ou IV sur la figure 1.

Les échantillons ainsi obtenus correspondraient à l'échantillonnage à quatre fois la fréquence de la sous-porteuse de chrominance pour une trame telle que la trame studio, la sous-porteuse résultante ayant directement la phase adéquate.

La figure 7 représente schématiquement la partie du dispositif d'extraction de chrominance pour le système SECAM. Comme il a été dit ci-dessus en liaison avec la description du procédé de traitement, les échantillons de la ligne la plus proche de la trame en mémoire contenant le même type d'information sont transmis directement, aucune combinaison entre deux lignes consécutives n'étant possible du fait de la modulation en fréquence des sous-porteuses. Le dispositif comporte donc trois entrées recevant les échantillons correspondant à trois lignes consécutives $L_{n-1}$, $L_n$ et $L_{n+1}$, ces trois entrées étant respectivement reliées à l'entrée de trois interrupteurs, 31, 32 et 33, dont les sorties sont reliées à la sortie du dispositif d'extraction de chrominance. Le premier interrupteur, 31, est fermé lorsque la trame est décalée de trois rangs par rapport à la trame en mémoire (type IV), les deux autres interrupteurs étant alors ouverts, l'interrupteur,32,est fermé lorsque la trame est de même rang ou décalée d'un rang par rapport à la trame en mémoire (trames de types I et II), les deux autres interrupteurs étant ouverts, et l'interrupteur 3 est fermé lorsque la trame est décalée de deux rangs par rapport à la trame en mémoire (trame de type III), les deux autres interrupteurs étant fermés. Dans le système SECAM, la phase de la sous-porteuse n'ayant pas le rôle fondamental qu'elle a dans le PAL ou le NTSC, le cycle de quatre trames est ainsi restitué.

Pour l'extraction de chrominance pour le système PAL, comme indiqué en liaison avec la description générale du procédé d'extraction de la chrominance , la fréquence d'échantillonnage $F_{ech} = 4\ f_{sc}$ n'est pas un multiple de la fréquence ligne.

Pour la lecture des valeurs dans la mémoire trame le compteur d'adresse associé à cette mémoire est normalement remis à zéro par des impulsions synchrones de la synchronisation ligne. Pour le système PAL, cette remise à zéro entraîne un décalage de une période de la fréquence d'échantillonnage pour la remise à zéro du compteur d'adresse par rapport à la synchronisation ligne. Si on ne tient pas compte de ce décalage, il apparaîtra sur l'image de sortie, les transitions verticales n'étant pas en phase mais décalées d'une période de la fréquence d'échantillonnage.

Pour éviter ce défaut, le dispositif suivant l'invention prend en compte une référence supplémentaire qui est la phase de la salve de la sous-porteuse de référence $f_{sc}$, mise en mémoire en même temps que le signal utile pendant l'intervalle de suppression ligne.

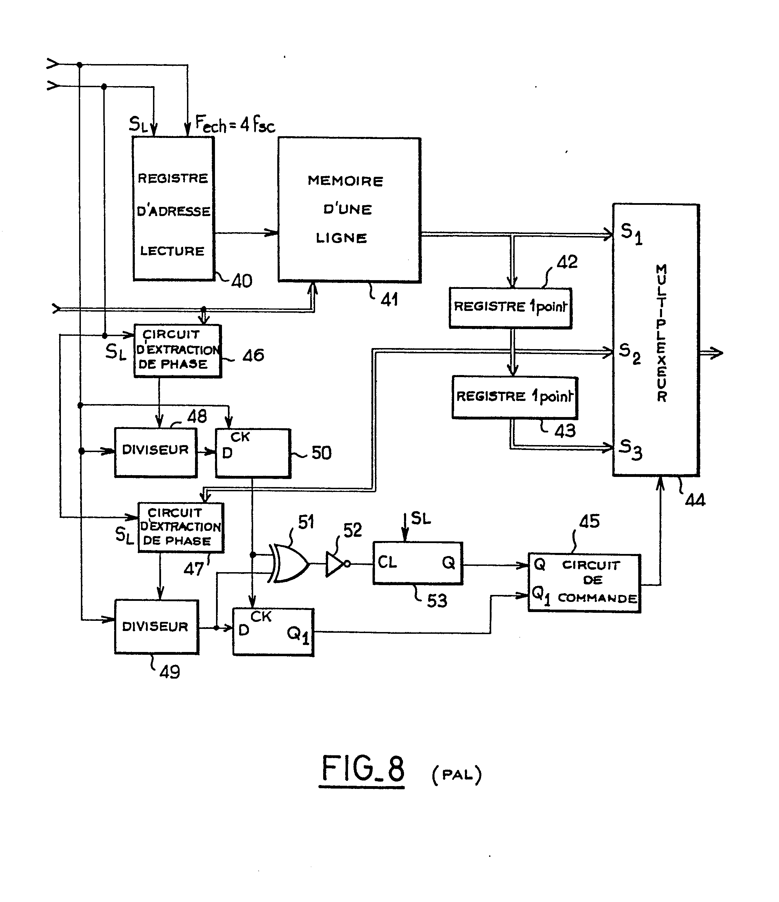

Comme indiqué ci-dessus, il y a à chaque ligne un décalage de $(\frac{3}{4} + \frac{1}{625})$ période de sous-porteuse par rapport à la synchronisation ligne. La sous-porteuse à la sortie d'une mémoire d'une ligne peut donc être obtenue soit à partir des informations en mémoire, soit à partir de la sous-porteuse à l'entrée retardée d'une période de la fréquence d'échantillonnage. L'erreur due à l'adressage étant de 1 point, la comparaison des deux signaux à la fréquence $f_{sc}$ permet de corriger l'erreur de $\pm$ 1 point par le circuit décrit sur la figure 8 qui représente partiellement le circuit 2 de la figure 4, pour le système PAL. Ce circuit formé du circuit d'adressage associé à la mémoire de ligne est constitué de la manière suivante : De manière classique le registre d'adresse de lecture 40 a sa sortie 1 d'adresse reliée à l'entrée d'adressage de la mémoire de ligne 41 qui comporte par ailleurs une entrée des valeurs d'échantillons et une sortie de ces mêmes valeurs. Pour pouvoir introduire un décalage en plus ou en moins de un échantillon, cette sortie est reliée à l'entrée d'un premier registre mémoire 42, de une seule valeur, dont la sortie est elle-même reliée à l'entrée d'un second registre 43 de une seule valeur d'échantillon. L'entrée et la sortie du registre 42 et la sortie de registre 43 sont reliées aux trois entrées de signal $S_1$, $S_2$ et $S_3$ d'un multiplexeur 44 dont la sortie est la sortie de lecture de la mémoire d'une ligne. Ce multiplexeur comporte une entrée de commande reliée à la sortie d'un circuit de commande 45. Ce circuit de commande a deux entrées recevant des signaux Q et $Q_1$ obtenus en comparant la phase de la sous-porteuse à l'entrée de la mémoire ligne 41 et la phase de la sous-porteuse à la sortie de la mémoire et en fait la sous-porteuse à l'entrée retardée de une période de $F_{ech}$ et la sous-porteuse à la sortie du premier registre de une valeur 42.

Pour cela, un premier circuit d'extraction de phase 46 est relié à l'entrée de signal de la mémoire 41, un second circuit d'extraction de phase 47 étant relié à la sortie du registre 42. Ces deux circuits ont une entrée de commande recevant les impulsions de synchronisation ligne, et leurs sorties sont reliées aux entrées d'initialisation de deux diviseurs par quatre, 48 et 49, recevant sur leurs entrées le signal à la fréquence d'échantillonnage 4 $f_{sc}$. Les signaux de sortie de ces deux diviseurs sont donc le signal à la fréquence $f_{sc}$ à l'entrée de la mémoire et le signal à la fréquence $f_{sc}$ à la sortie de la mémoire, après le registre de une valeur 42. Une bascule 50 dont l'entrée D est reliée à la sortie du premier diviseur 48 et dont l'entrée d'horloge est reliée à l'entrée de signal à la fréquence d'échantillonnage permet de retarder le signal $f_{sc}$ à l'entrée de la mémoire de une période d'échantillonnage. La sortie de cette bascule 50 et la sortie du second diviseur 49 sont reliées aux entrées d'une porte OU exclusif 51, elle-même suivie d'inverseur 52. Ainsi, la sortie de l'inverseur 52 délivre un signal au niveau logique 0 lorsque $f_{sc}$ retardé et

15

$f_{sc}$ à la sortie de 42 coïncident et un signal à la fréquence 2 $f_{sc}$ lorsque ces signaux sont décalés d'une période d'échantillonnage. Dans ce dernier cas il faut commander un changement d'entrée de signal au multiplexeur 44. Pour cela la sortie de l'inverseur est reliée à une bascule bistable de sortie 53 qui reproduit à sa sortie Q l'état de son entrée, au début de chaque ligne. La sortie Q est donc à l'état 1 lorsque les signaux coïncident et à l'état 0 lorsqu'un décalage de une valeur doit être commandé. C'est cette sortie qui est reliée à la première entrée Q du circuit de commande 45. La seconde entrée $Q_1$ indique le sens du décalage. Pour cela cette entrée est reliée à la sortie d'une bascule D, 54 dont l'entrée est reliée à la sortie du diviseur 49 et dont l'entrée d'horloge est la sortie de la bascule 50. Ainsi, selon que $f_{sc}$ à la sortie du registre 42 est en avance ou en retard par rapport à $f_{sc}$ retardé à l'entrée de la mémoire, le signal $Q_1$ aura l'une ou l'autre des valeurs 1 ou 0. L'entrée $S_1$ sera utilisée lorsque Q = 0 et $Q_1$ = 0, l'entrée $S_3$ étant utilisée lorsque Q = 0 et $Q_1$ = 1, Q = 1 indiquant la mise en phase et l'utilisation de la sortie intermédiaire $S_2$. Ce circuit permet donc la mise en phase des valeurs d'échantillons en mémoire ligne par rapport à la synchronisation ligne pour tenir compte du fait que chaque ligne ne comporte pas un nombre entier de périodes de sous-porteuse. Un tel circuit de mise en phase est associé à chacune des mémoires de une ligne 41 et 61 sur la figure 4 pour le système PAL. Les circuits de mise en phase étant représentés en pointillés sur cette figure 4.

De la même manière, une mise en phase doit être réalisée dans le circuit d'adressage pour la lecture de la mémoire de trame, 1. Le circuit d'adressage et la mémoire de trame 1 avec son circuit de mise en phase sont représentés sur la figure 9.

Ce circuit est analogue à celui de la figure 8 et les éléments semblables à ceux de la figure 8 ont été désignés par les mêmes repères augmentés de 100. Ce circuit comporte la mémoire de trame proprement dite 100 suivie des registres mémoire de 1 point 142 et 143, les sorties de la mémoire de trame 100 et de ces deux registres étant reliées aux trois entrées du multiplexeur 144 dont l'entrée de commande est reliée à la sortie du circuit de commande 145. La sortie du registre 142 est reliée à l'entrée du circuit d'extraction de phase 146 recevant le signal de synchronisation ligne $S_L$ sur son entrée de commande. Sa sortie est reliée à l'entrée d'initialisation du diviseur par 4, 148 dont l'entrée reçoit le signal à la fréquence $F_{ech} = 4\,f_{sc}$ et dont la sortie est reliée directement à une première entrée du circuit de commande 145. Par ailleurs le second diviseur par 4, 149 a son entrée d'initialisation également reliée à la sortie du circuit d'extraction de phase 146 par l'intermédiaire d'un circuit commandé par la synchronisation trame qui n'autorise la prise en compte de la phase du signal qu'à chaque trame, l'entrée de signal de ce diviseur recevant également le signal à la fréquence $F_{ech} = 4\,f_{sc}$.

Le circuit d'adressage 110 de la mémoire de trame 100 comporte un registre d'adresse ligne 11 recevant des impulsions d'horloge à la fréquence ligne et remis à zéro par la synchronisation trame, un registre d'adresse point 112 recevant des impulsions d'horloge à la fréquence d'échantillonnage $F_{ech}$ et remis à zéro par la synchronisation ligne, les sorties de ces deux registres étant reliées à un dispositif de calcul d'adresse mémoire 113 dont la sortie est reliée à l'entrée d'adressage de lecture de la mémoire trame 100.

L'initialisation par mise à zéro de l'adresse ligne est réalisée à partir de la synchronisation trame comme indiqué sur le chronogramme de la figure 3, INIT. La phase relative entre l'impulsion d'initialisation INIT et le signal à la fréquence d'échantillonnage est constante à $\pm\,1$ ns près; l'information lue sur la première ligne est donc stable et fournit le signal de référence à la fréquence $f_{sc}$ pour la mise en phase.

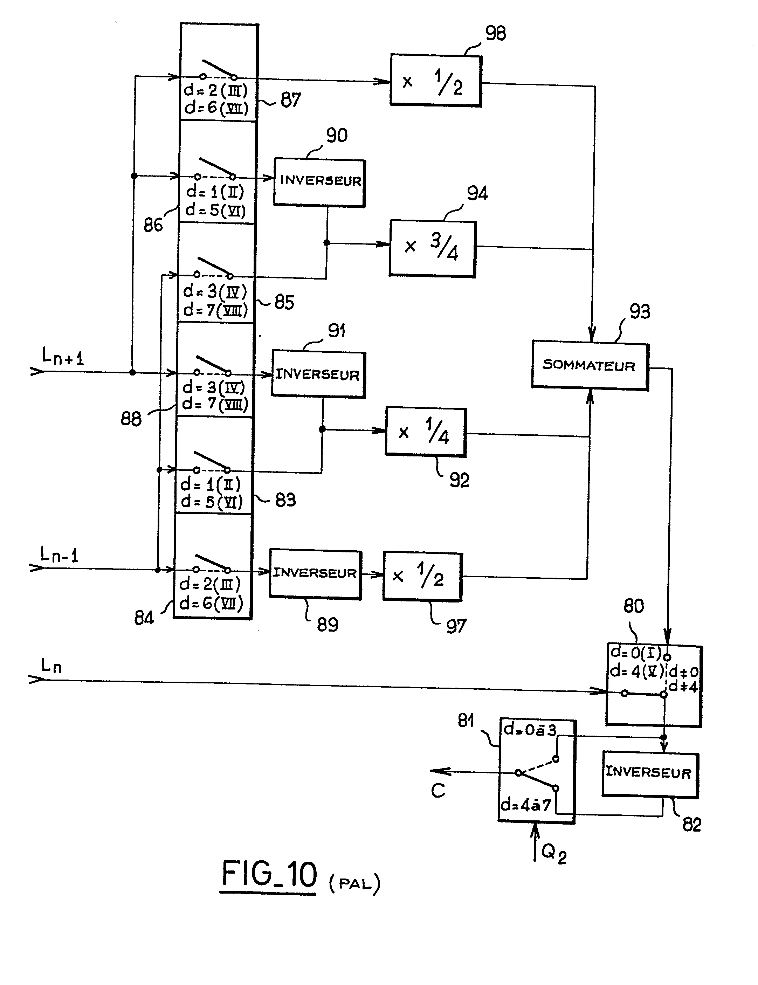

La figure 10 représente la partie du dispositif d'extraction de chrominance relative au système PAL. Les valeurs d'échantillons fournis à la sortie des mémoires de trame 1 et des mémoires d'une ligne 41 et 62 étant des valeurs correspondant à des sous-porteuses en phase, les valeurs, qui concernent les lignes $L_n$, $L_{n-1}$ et $L_{n+1}$ peuvent être combinées linéairement pour obtenir une séquence de valeurs d'échantillons correspondant à la trame studio. Pour cela, le dispositif représenté sur la figure 10, qui réalise le traitement indiqué ci-dessus pour le système PAL, comporte trois entrées destinées à recevoir les valeurs d'échantillons des lignes $L_n$, $L_{n-1}$ et $L_{n+1}$, et une entrée de commande, donnant le décalage de rang d de la trame studio dans le cycle PAL (8 trames) par rapport à la trame en mémoire, d = 0 à 7. L'entrée $L_n$ est reliée à la sortie C lorsque

17

d = 0 et d = 4 par un commutateur à deux positions 80 commandé par la valeur de d et un autre commutateur à deux positions 81 commandé par la valeur de d : $1^{\text{ère}}$ position d = 0 à 3 et $2^e$ position d = 4 à 7, la sortie de 80 étant reliée directement à une entrée de 81 et par l'intermédiaire d'un inverseur 82 à la seconde entrée de 81. Ainsi pour d = 0, les valeurs de la ligne $L_n$ sont transmises directement (trame I), et pour d = 4 ces valeurs sont inversées (trame V dans le cycle PAL)

L'entrée $L_{n-1}$ est reliée aux entrées de 3 interrupteurs 83, 84 et 85 tandis que l'entrée $L_{n+1}$ est reliée aux entrées de trois interrupteurs 86, 87 et 88. Les interrupteurs 83 et 86 sont fermés lorsque d = 1 et d = 5 (trames de type II et VI) et ouverts dans les autres cas. Les interrupteurs 84 et 87 sont fermés lorsque d = 2 et d = 6 (trames de type III et VII) et ouverts dans les autres cas. Les interrupteurs 85 et 88 sont fermés lorsque d = 3 et d = 7 (trames de type IV et VIII) et ouverts dans les autres cas. Les sorties des interrupteurs 84, 86 et 88 sont reliées à des inverseurs respectivement 89, 90 et 91. La sortie de l'interrupteur 83 et la sortie de l'inverseur 91 sont reliées à un multiplicateur par un coefficient $\frac{1}{4}$, 92, dont la sortie est reliée à la première entrée d'un sommateur 93, tandis que la sortie de l'inverseur 90 et la sortie de l'interrupteur 85 sont reliées à l'entrée d'un multiplicateur par $\frac{3}{4}$, 94 dont la sortie est reliée à la seconde entrée du sommateur 93. Enfin, les sorties de l'inverseur 89 et de l'interrupteur 87 sont reliées à deux multiplicateurs par $\frac{1}{2}$, 97 et 98 dont les sorties sont également reliées à la seconde entrée du sommateur 93, la sortie de ce dernier étant reliée à la seconde entrée du commutateur 80. Ainsi les combinaisons des valeurs d'échantillons sont celles indiquées ci-dessus pour l'obtention de la trame studio à partir d'une seule trame en mémoire, dans le système PAL.

L'invention n'est pas limitée aux modes de réalisation précisément décrits, en particulier en ce que concerne la lecture des mémoires pour assurer que les combinaisons d'échantillons portent sur des valeurs qui peuvent être combinées.

18

## REVENDICATIONS

1. Procédé de reconstitution d'une image de télévision à partir d'une trame d'un signal composite numérisé et mis en mémoire, caractérisé en ce qu'il consiste à traiter directement les valeurs des échantillons de la trame en mémoire en fonction de la séquence de synchronisation des trames gouvernant de la reconstitution de l'image, par deux traitements indépendants pour l'obtention d'une composante de luminance d'une part, et d'une composante de chrominance d'autre part, l'addition de ces deux composantes donnant un signal composite synchronisé avec la séquence de synchronisation de l'image, le traitement pour l'obtention de la composante de luminance consistant à transmettre directement les valeurs d'échantillons pour les trames studio de même parité que la trame en mémoire et à transmettre les moyennes entre les échantillons de deux lignes adjacentes pour chaque trame de la séquence de parité différente de celle de la trame en mémoire.

2. Procédé selon la revendication 1, pour la reconstitution d'une image suivant le système NTSC ou le système PAL dans lesquels la fréquence d'échantillonnage pour la numérisation est un multiple de la fréquence de la sous-porteuse de couleur, caractérisé en ce que la lecture des valeurs d'échantillons dans la mémoire tient compte du décalage de la sous-porteuse entre la trame à restituer et la trame en mémoire.

3. Procédé selon la revendication 2, pour la reconstitution d'une image suivant le système NTSC dans lequel le cycle nécessaire pour retrouver une ligne de mêmes caractéristiques quant à la synchronisation et à la phase de la porteuse comporte quatre trames, les sous-porteuses de référence étant en opposition de phase sur deux lignes consécutives, caractérisé en ce que le traitement des valeurs d'échantillons de la trame en mémoire pour l'obtention de la composante de chrominance résultante consiste à transmettre, pour former une ligne des trames de même parité que celle de la trame en mémoire, les valeurs d'échantillons de la ligne correspondante, directement ou après inversion de signe selon que la ligne à former a une sous-porteuse de référence en phase ou en opposition de phase avec celle de la ligne correspondante, et à transmettre la moyenne des valeurs d'échantillons de deux lignes consécutives de la trame en mémoire après inversion de signe de l'une d'elles pour reconstituer les lignes intercalées, pour les trames de parité différente de celle de la trame en mémoire, l'inversion de signe portant sur la valeur de l'échantillon issu de la ligne de la trame mémoire pour laquelle la sous-porteuse de référence est en opposition de phase par rapport à celle de la ligne à former.

4. Procédé selon la revendication 2, pour la reconstitution d'une image suivant le système PAL dans lequel le cycle nécessaire pour retrouver une ligne de mêmes caractéristiques quant au type d'informations transmises, à la synchronisation et à la phase de la sous-porteuse comporte huit trames, caractérisé en ce que le traitement des valeurs d'échantillons de la trame en mémoire pour l'obtention de la composante de chrominance résultante consiste à transmettre, pour former une ligne des trames de même parité que la trame en mémoire, les valeurs d'échantillons de la ligne correspondante éventuellement inversés ou une combinaison des valeurs d'échantillons de la ligne précédente et de la ligne suivante, selon que le type d'informations à transmettre est le même ou est différent de celui de la ligne correspondante de la trame mémoire, et à transmettre, pour former une ligne des trames de parité différente de celle de la trame en mémoire, une combinaison des valeurs d'échantillons des deux lignes encadrant la ligne à former et comportant le même type d'informations transmises, la proportion des échantillons des deux lignes considérées dans les combinaisons étant égale au rapport des distances sur l'image finale entre la ligne à former et ces deux lignes et le signe des échantillons considérés dans les combinaisons étant inversé pour ceux associés à une sous-porteuse opposée en phase.

5. Procédé selon la revendication 1, adapté à la reconstitution d'une image suivant le système SECAM dans lequel la fréquence d'échantillonnage pour la numérisation est un multiple de la fréquence trame, caractérisé en ce que les échantillons résultant du traitement pour la composante de luminance sont synchrones sur toutes les trames et transmis directement.

6. Procédé selon la revendication 5, pour la reconstitution d'une image suivant le système SECAM dans lequel le cycle nécessaire pour retrouver une ligne de mêmes caractéristiques quant à la synchronisation et au type d'informations transmises comporte quatre trames, caractérisé en ce que le traitement des valeurs d'échantillons de la trame en mémoire, pour l'obtention de la composante de chrominance résultante, consiste à transmettre, pour former une ligne des trames de même parité que la trame en mémoire les valeurs d'échantillons de la ligne correspondante ou les valeurs d'échantillons de la ligne précédente ou suivante selon que le type d'informations transmises par la ligne correspondante est le même ou est différent, et à transmettre pour former une ligne des trames de parité différente de celle de la trame en mémoire les échantillons de la ligne adjacente comportant le même type d'informations transmises.

7. Dispositif de reconstitution d'une image de télévision à partir d'une trame d'un signal composite numérisé, destiné à la mise en oeuvre du procédé selon l'une quelconque des revendications précédentes, caractérisé en ce qu'il comporte une mémoire de trame (1) pour la mise en mémoire des valeurs d'échantillons de la trame du signal composite numérisé, un circuit à retard (2) de retard égal à deux périodes de ligne ayant une sortie intermédiaire après un retard d'une période de ligne, deux voies parallèles de traitement dont les sorties délivrent respectivement la composante de luminance et la composante de chrominance adaptées à la trame de la séquence studio en cours, ces sorties étant reliées aux entrées d'un sommateur de sortie(6), chaque voie de traitement comportant un dispositif de traitement des valeurs d'échantillons (3, 7), un convertisseur numérique-analogique (4, 8) et un filtre adapté à la bande de la composante à transmettre (5, 9).

8. Dispositif selon la revendication 7, caractérisé en ce que le dispositif de traitement de la luminance (3) comporte un premier interrupteur (12) dont l'entrée est reliée à la sortie intermédiaire du circuit à retard (2) et un second interrupteur (11) dont l'entrée est reliée à la sortie d'un circuit moyenneur (10) dont les entrées sont reliées à la sortie intermédiaire et à la sortie du circuit à retard (2), ces interrupteurs ouverts et fermés alternativement ayant une entrée de commande destinée à recevoir un signal caractéristique du décalage de la trame dans le cycle par rapport à la trame en mémoire.

9. Dispositif selon la revendication 8, caractérisé en ce que, pour la reconstitution d'une image suivant le système NTSC, le dispositif de traitement de la chrominance (7) comporte une série de cinq interrupteurs (20, 21, 22, 23 et 24) dont les entrées sont respectivement reliées, pour les trois premiers à la sortie intermédiaire ($L_n$) du circuit à retard (2) et pour les deux autres à la sortie de la mémoire de trame ($L_{n-1}$), ces interrupteurs ayant des entrées de commande de fermeture actionnées lorsque le décalage des rangs de la trame en mémoire et de la trame studio est respectivement égal à zéro (20) deux ou trois (21), un (22), et trois (24), la sortie du premier interrupteur (20) étant reliée directement à la sortie du dispositif de traitement (C), le dispositif comportant en outre un circuit de calcul de moyennes reliées aux sorties des quatre derniers interrupteurs pour le calcul des moyennes entre les valeurs d'échantillons.

10. Dispositif selon la revendication 8, caractérisé en ce que, pour la reconstitution d'une image suivant le système SECAM, le dispositif de traitement de chrominance (7) comporte trois interrupteurs (31, 32, 33) dont les entrées sont respectivement reliées à la sortie de la mémoire de trame (1), à la sortie intermédiaire et à la sortie du circuit à retard (2), et dont les sorties sont reliées à la sortie (C) du dispositif de traitement de chrominance, et en ce que ces trois interrupteurs ont des entrées de commande de fermeture actionnées lorsque le décalage entre le rang de la trame en mémoire et le rang de la trame studio à reconstituer est respectivement égal à trois rangs, à zéro ou à un rang, et à deux rangs.

11. Dispositif selon la revendication 8, caractérisé en ce que, pour la reconstitution d'une image suivant le système PAL, ce dispositif comporte des circuits de mise en phase pour la sortie de la mémoire de trame et pour les sorties du circuit à retard, le dispositif de traitement de chrominance comportant une série de six interrupteurs (83 à 88) dont les entrées sont respectivement reliées, pour les trois premiers à la sortie de la mémoire de trame ($L_{n-1}$) et pour les trois autres à la sortie ($L_{n+1}$) du circuit à retard, un circuit de calcul (89 à 98) relié aux sorties de ces interrupteurs pour le calcul des combinaisons de valeurs d'échantillons, un commutateur (80) dont une entrée est reliée à la sortie intermédiaire ($L_n$) du circuit à retard (2) et dont l'autre entrée est reliée à la sortie du circuit de calcul, la sortie de ce commutateur étant reliée à sa première entrée lorsque le décalage des rangs est zéro ou quatre et à sa seconde entrée lorsque le décalage des rangs des trames dans le cycle est différent de zéro ou quatre, cette sortie étant reliée directement à la sortie (C) du dispositif lorsque la trame studio est décalée de zéro à trois rangs par rapport à la trame en mémoire et par l'intermédiaire d'un inverseur lorsque ce décalage est de quatre à sept rangs.

NTSC : ↑ = 180°
↓ = -180°

FIG_1

FIG_2

_ SECAM _

2/8

0071510

PAL : $\uparrow$ = + 135°
$\downarrow$ = − 135°

FIG_3

FIG_4

FIG_5

FIG_6 (NTSC)

FIG_7 (SECAM)

FIG_8 (PAL)

FIG_9  (PAL)

FIG_10 (PAL)

# 0071510

Numéro de la demande

**Office européen**
**des brevets**

## RAPPORT DE RECHERCHE EUROPEENNE

EP    82  40  1309

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | H 04 N    9/535 |
| X | EP-A-0 008 844  (B.B.C.)<br><br>* Page 5, ligne 4 - page 9, ligne 8; page 10, lignes 11-16 * | 1,2,4,<br>7,8,11 | H 04 N    9/491 |
| X | --- <br> EP-A-0 005 955  (B.B.C.)<br>* Page 20, lignes 1-21 * | 1,2,7 | |
| X | --- <br> GB-A-2 037 530  (SONY)<br>* Page 2, ligne 25 - page 3, ligne 25 * | 1 | |
| X | --- <br> DE-A-2 640 759  (ROBERT BOSCH)<br>* Page 2, lignes 17-20; page 6, lignes 1-12 * | 1 | |
| | ----- | | DOMAINES TECHNIQUES RECHERCHES (Int. Cl. ³) <br><br> H 04 N    9/00 |

Le présent rapport de recherche a été établi pour toutes les revendications

| Lieu de la recherche | Date d'achèvement de la recherche | Examinateur |
|---|---|---|
| LA HAYE | 01-11-1982 | CRISTOL Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03.82